# EUROPÄISCHE PATENTSCHRIFT

(11) **EP 0 948 776 B1**
(45) Veröffentlichungstag und Bekanntmachung des Hinweises auf die Patenterteilung: **19.03.2003**
(21) Anmeldenummer: 97951920.4
(22) Anmeldetag: 19.11.1997
(51) Int. Cl.: G06K 19/077

(54) **VERFAHREN ZUM HERSTELLEN EINER CHIPKARTE**
MANUFACTURING OF A CHIP CARD
MODE DE FABRICATION D'UNE CARTE A PUCE

(30) Priorität: 19.11.1996 DE 19647845
(43) Veröffentlichungstag der Anmeldung: 13.10.1999
(73) Patentinhaber: PAV Card GmbH, 22952 Lütjensee (DE)
(72) Erfinder: WILM, Robert, D-22929 Kasseburg (DE)
(74) Vertreter: Kruspig, Volkmar, Dipl.-Ing.
(86) Internationale Anmeldenummer: EP9706470
(87) Internationale Veröffentlichungsnummer: WO98022907

(56) Entgegenhaltungen:
- EP-A- 0 682 321
- DE-A- 4 431 605
- DE-A- 19 500 925

## Beschreibung

Die Erfindung betrifft ein Verfahren zum Herstellen einer Chipkarte, wobei ein auf einem Modul befindlicher Halbleiterchip in einer Ausnehmung eines Kartenträgers mechanisch und elektrisch kontaktiert ist, sowie mit einer in der Chipkarte angeordneten induktiven Informationsübertragungseinrichtung.

Bei bekannten Verfahren zur Herstellung einer Chipkarte, insbesondere solcher, bei der sowohl Mittel zur kontaktlosen Datenübertragung als auch eine galvanische Kontaktebene vorhanden sind, wird in einen Kartenkörper ein Modul eingebracht, welcher einen Halbleiter- oder IC-Chip umfaßt.

Der Modul wird in eine Ausnehmung im Kartenkörper eingelegt und mittels Fügen oder dergleichen mit dem Kartenkörper unter Erhalt einen entsprechenden mechanischen und elektrischen Verbindung laminiert.

Eine elektrisch leitende Verbindung zwischen Modul und Kartenkörper bei auf dem Kartenkörper befindlichen Kontakten, die mit einer Induktionsspule, die als Informationsübertragungseinrichtung wirkt, in Verbindung stehen, kommt beispielsweise dadurch zustande, daß ein anisotroper leitender Klebstoff im Bereich der Anschlußstellen und/oder der Verbindungsstellen des jeweiligen Mittels für eine kontaktlose Datenübertragung aufgetragen und der Klebstoff zumindest im Bereich der Anschlußstellen so weit verdichtet oder komprimiert wird, daß eine elektrisch leitende Brücke entsteht.

Bei der Herstellung von Chipkarten werden Module verwendet, die auf einen Kunststoffträger zurückgehen, auf dem das eingangs erwähnte Halbleiter- oder IC-Chip angeordnet ist. Das so vorgefertigte Modul wird mit dem Kartenträger, der z.B. aus Polykarbonat bestehen kann, verbunden. Dieses Verbinden oder das Einsetzen des Moduls in den Kartenkörper in eine z.B. gefräste Ausnehmung oder Kavität erfolgt üblicherweise unter Rückgriff auf Klebeverfahren bei Einsatz eines Heißoder Schmelzklebers.

Bei der Montage von Kombikarten, die sowohl zur kontaktlosen als auch zur kontaktbehafteten Verwendung geeignet sind, bestehen erhebliche Einschränkungen hinsichtlich der technologischen Freiheitsgrade. Andererseits ist es erwünscht, möglichst ein und denselben Modul aus Standardisierungsgründen für alle möglichen Anwendungsfälle einsetzen zu können, ohne daß besondere konstruktive Lösungen notwendig sind oder Zwischenträger oder dergleichen eingesetzt werden müssen.

Es ist daher Aufgabe der Erfindung, ein Verfahren zum Herstellen einer Chipkarte anzugeben, wobei ein auf einem Modul befindlicher Halbleiterchip in eine Ausnehmung eines Kartenkörpers zur mechanischen und elektrischen Kontaktierung mit einer Informationsübertragungseinrichtung eingesetzt wird dergestalt, daß konstruktiv einfach gestaltete, standardisierte Module verwendet werden können, wobei gleichzeitig die Verkappung bzw. der äußere Abschluß im Bereich der Ausnehmung des Kartenkörpers technologisch günstiger gestaltet ist und die Wärmeenergie zum Erhalt einer Löt- oder Klebeverbindung minimiert werden kann.

DE-A-1 950 092 5 offenbart ein Verfahren, das die Merkmale des Oberbegriffs der Ansprüche 1 und 4 behinhaltet.

Die Lösung der Aufgabe der Erfindung erfolgt mit einem Verfahren gemäß den Patentansprüchen 1 oder 4, wobei die Unteransprüche mindestens zweckmäßige Ausgestaltungen und Weiterbildungen umfassen.

Gemäß einem ersten Grundgedanken der Erfindung weist die Ausnehmung Anschlußflächen oder Anschlußabschnitte auf, die Bestandteil der induktiven Informationsübertragungseinrichtung sind oder zu dieser führen. Als Informationsübertragungseinrichtung dient beispielsweise eine Antennenspule, die mit einem äußeren Lesegerät oder Terminal wechselwirkt.
Der auf dem Modul bzw. einem Trägersubstrat, das einen Teil des Moduls bildet, befindliche Halbleiterchip wird quasi facedown in die Ausnehmung eingesetzt, wobei die Modulrückseite die Ausnehmung nach außen hin im wesentlichen abschließt. Die Modulvorderseite weist Kontakte auf, die mit den Anschlußflächen oder Anschlußabschnitten stoffschlüssig, vorzugweise durch Löten oder Schweißen, verbindbar sind.

Es liegt im Sinne der Erfindung, daß über das Modul bzw. die Modulrückseite gezielt Wärmeenergie zu den Anschlußflächen oder Anschlußabschnitten geführt werden kann, so daß bei minimalem, örtlich begrenzten Energieeintrag eine hohe Kontaktsicherheit und Kontaktgüte gewährleistet ist.

In einer Ausführungform gemäß dem ersten Grundgedanken der Erfindung besteht die Möglichkeit, die Grundfläche des Moduls so auszubilden, daß diese im wesentlichen um die Anschlußflächen oder Anschlußabschnitte bezogen auf die Grundfläche des eigentlichen Halbleiterchips vergrößert ist. In diesem Falle kann die Ausnehmung bzw. Kavität im Kartenkörper entsprechend kleiner ausgeführt werden, was sowohl fertigungstechnologisch kostengünstiger ist als auch eine gewünschte Stabilitätserhöhung des Kartenkörpers nach sich zieht. Bei dieser Ausführungsform wird dann ebenfalls eine facedown-Montage vorgenommen, wobei die sich aus der vergrößerten Grundfläche ergebenden Kontakte des Moduls mit den Anschlußflächen oder -abschnitten der induktiven Informationsübertragungseinrichtung verbindbar sind. Dieses Verbinden erfolgt in vorteilhafter Weise ebenfalls durch lokal einwirkende Wärmeenergie stoffschlüssig mittels Löten oder Schweißen.

Durch die exakte Positionierung der Module facedown in der korrespondierenden Ausnehmung des Kartenkörpers ergibt sich eine genaue Lagebeziehung der gegenüberstehenden Kontakte, die auch mit sogenanntem Bumps versehen sein können. Hierdurch ist es möglich, die notwendigen Anschlüsse simultan zu kontaktieren, indem eine Thermode definiert so in Richtung Modulrückseite abgesenkt wird, daß in einem Schritt sich die gewünschte Verbindung aller, bei Kontaktierung einer Antennenspule von z.B. zwei Kontakten ausbildet.

Gemäß einem zweiten Grundgedanken der Erfindung weist die Ausnehmung im Kartenkörper wiederum Anschlußflächen oder Anschlußabschnitte auf, die Bestandteil einer Informationsübertragungseinrichtung, z.B. einer Antenne, sind oder zu dieser führen. Der Modul besitzt ein Trägersubstrat, auf welchem in an sich bekannter Weise der Halbleiterchip fixiert ist.

Das Trägersubstrat, insbesondere die Trägersubstratrückseite, enthält Oberflächenkontakte, welche beim Einsetzen des Moduls in die Ausnehmung des Kartenkörpers mit den Anschlußflächen oder Anschlußabschnitten stoffschlüssig verbindbar sind.

Bei dieser Ausführungsform wird also der Modul mit der Trägersubstratrückseite voran von der Ausnehmung aufgenommen, wobei der verbleibende Ausnehmungsraum bis hin zur Oberfläche des Kartenkörper verfüllbar ist und/oder eine diesen Raum nach oben abschließende Platte eingesetzt wird.

Gemäß einer vorteilhaften Ausführungsform des zweiten Grundgedankens der Erfindung sind auf dem Trägersubstrat seitliche Aussparungen, vorzugsweise im Kontaktbereich ausgebildet, wobei diese Aussparungen dem gezielten Zuführen von Lot und/oder Flußmittel sowie von Wärmeenergie zum Erhalt oder zur Ausbildung der stoffschlüssigen Verbindung dienen.

Bei einer weiteren Ausführungsform der Erfindung besitzt das Trägersubstrat die bereits erwähnten Oberflächenkontakte in Form einer Metallisierungsebene, die zu einer darunter liegenden Leitbahnmetallisierung führt und die einen Endkontaktbereich zum Herstellen üblicher Bondverbindungen zum Halbleiterchip umfaßt. Die für den Oberflächenkontakt maßgebliche Metallisierungsebene besitzt eine Öffnung.

Beim Einbringen oder Aufbringen gezielter Wärmeenergie zum Erhalt einer Lötverbindung zwischen den Oberflächenkontakten und den Anschlußflächen für die Antenne im Kartenkörper gelingt es, durch das Ausbilden der Öffnung direkt Energie auf das Lot einzukoppeln. Vorzugsweise kann die Öffnung gleichzeitig als Lotdepot dienen. Durch diese Maßnahme ist sichergestellt, daß einerseits immer eine ausreichende Menge Lot im Kontaktierungsbereich vorhanden ist, und andererseits mit weniger Energie die erforderliche Erwärmung zum Erhalt der stoffschlüssigen Verbindung realisiert werden kann. Eine Kontaminierung der Fügepartner durch geschmolzenes Kunststoffmaterial des Kartenkörpers ist nicht zu erwarten, da, wie erwähnt, mit einer geringeren Energiemenge und in einer kürzeren Zeit gearbeitet werden kann. In dem Falle, wenn anstelle einer Löt- oder Schweißverbindung auf eine Klebeverbindung zurückgegriffen wird, kann das oben beschriebenen Verfahren analog Verwendung finden, wobei sich bei den eingesetzten Klebstoffen, insbesondere Leitklebstoffen, die Aushärtezeit in vorteilhafter Weise verringert.
Die vorstehend beschriebene Ausführungsform ist sowohl bei der Ausbildung Einsetzen des Moduls facedown in die Ausnehmung des Kartenkörpers als auch bei der Variante Einsetzen des Moduls mit der Trägersubstratrückseite voran in die Ausnehmung anwendbar.

Es wird also gemäß vorliegender Erfindung von einem Chipmodul ausgegangen, dessen Trägersubstrat einerseits zum Abdecken der Ausnehmung und Kontaktierung und andererseits zur alleinigen Kontaktierung hin zur Informationsübertragungseinrichtung dient.

Zur Verbindung des Halbleiterchip mit der induktiven Informationsübertragungseinrichtung sind mindestens zwei korrespondierende Kontaktflächen ausgebildet. Die eigentliche Herstellung der elektrischen Verbindung zwischen Modul und Informationsübertragungseinrichtung erfolgt durch Löten, Schweißen insbesondere unter Rückgriff auf Thermoden und mittels verwandter Fügeverfahren.

Die Ausnehmung im Kartenkörper ist vorzugsweise so bemessen, daß das Chipmodul auf seiner Rückseite diese vollständig und bündig zur Kartenoberfläche hin abschließen kann. Der verwendete Modul kann einem Standardmodul entsprechen, der auch für kontaktlos-kontaktbehaftete Karten eingesetzt wird, wobei jedoch im vorliegenden Fall die eigentliche äußere Kontaktfläche nicht für die Kontaktierung zum Lesegerät hin benutzt wird, sondern lediglich dem Abschluß der Karte nach außen dient.

Verbleibende Zwischenräume können mit einer geeigneten Vergußmasse in an sich bekannter Weise verfüllt werden, wobei zusätzlich eine Oberflächen-Abdeckplatte die Ausnehmung nach oben begrenzt.

Die Erfindung soll nachstehend anhand von Ausführungsbeispielen sowie unter Zuhilfenahme von Figuren näher erläutert werden.

Hierbei zeigen:
- Fig. 1: ein erstes Ausführungsbeispiel des Einbaus eines Moduls mit Halbleiterchip;
- Fig. 2: ein zweites Ausführungsbeispiel des Einbaus eines Moduls ebenfalls facedown, wie in Fig. 1 gezeigt, jedoch mit miniaturisierter Modulfläche und mit äußerem Abdeckplättchen;
- Fig. 3a: eine Ausführungsform zur Montage eines Moduls in eine Ausnehmung eines Kartenkörpers mit einem Trägersubstrat;
- Fig. 3b: eine Draufsicht auf ein Trägersubstrat, das bei der Ausführungform nach Fig. 3 zweckmäßigerweise eingesetzt wird;
- Fig. 4a: eine Draufsicht auf ein Modul mit Antennenanschlußkontakten, und
- Fig. 4b: einen Schnitt längs der Linie A-A nach Figur 4a.

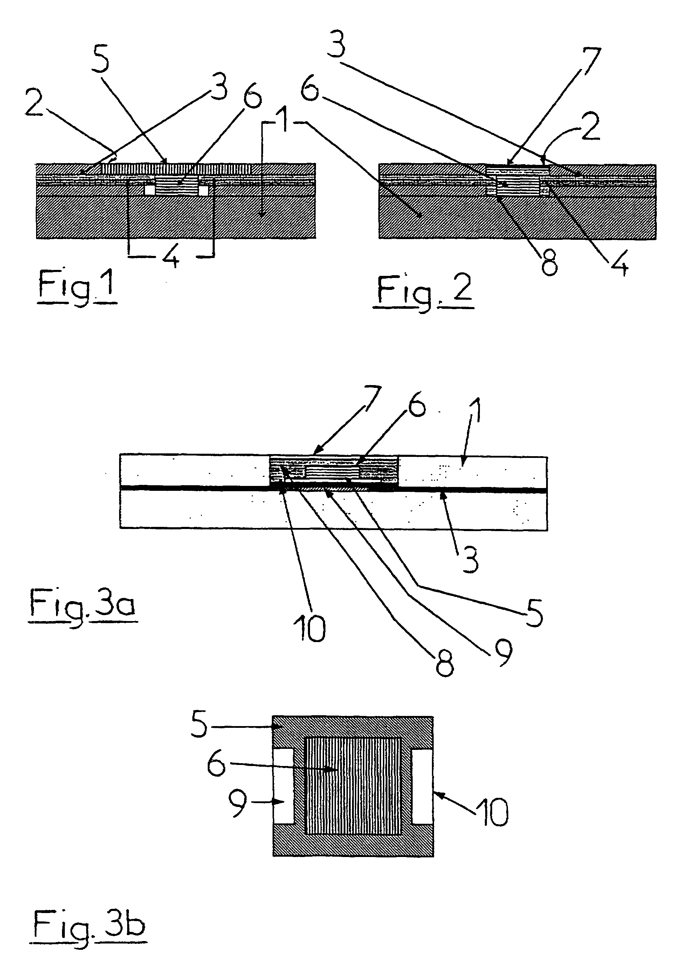

Anhand der Fig. 1 soll zunächst ein erstes Ausführungsbeispiel eines Herstellungs- und Montageverfahrens einer Chipkarte näher beschrieben werden.
Mit dem Bezugszeichen 1 ist ein Kartenträger versehen, welcher eine Ausnehmung 2 aufweist. Eine induktive Informationsübertragungseinrichtung, z.B. eine Antenne 3, bildet Anschlußflächen oder Anschlußabschnitte 4, die in die Ausnehmung 2 lateral hineinreichen.

Die Ausnehmung 2 ist so geformt, daß diese mit der Fläche des Moduls bzw. des Moduls und des Halbleiterchips korrespondiert. Der Modul 5 nimmt beim gezeigten Ausführungsbeispiel den Halbleiterchip 6 in bekannter Weise auf und dient als Träger des letzteren.

Im Montageverfahren wird nun der Modul 5 mit montiertem Halbleiterchip 6 facedown in die Ausnehmung 2 eingesetzt, wobei sich nicht gezeigte Kontakte auf der Modulinnenseite 5 in einer solchen Position befinden, daß diese mit den Anschlußflächen 4 der Antenne 3 korrespondieren. Der Modul 5 verschließt dabei die Ausnehmung 2.

Über-die nach außen zeigende Rückseite des Moduls 5 kann gezielt und lokal begrenzt Wärmeenergie zum Ausbilden einer stoffschlüssigen Verbindung zwischen den Anschlußflächen 4 der Antenne 3 und den Kontakten des Moduls zugeführt werden.

Möglicherweise verbleibende Zwischenräume können durch eine Luftaustrittsbohrung nachträglich verfüllt werden. Alternativ kann in dem Falle, wenn der Modul 5 die Ausnehmung 2 nicht vollständig ausfüllt, eine Vergußmasse eingebracht werden und/oder die Modulrückseite eine Oberflächenbeschichtung aufweisen.

Bei dem Ausführungsbeispiel nach Fig. 2 wird montageseitig auf ein ähnliches Grundprinzip, wie anhand der Fig. 1 beschrieben, zurückgegriffen.

Im Unterschied hierzu besitzt jedoch der Modul 5 eine Grundfläche, die nur um die Abmessungen der Anschlußflächen 4 der Antenne 3 vergrößert ist. In diesem Falle kann die Ausnehmung 2 im Kartenträger 1 kleiner ausgeführt werden, so daß sich der Fertigungsaufwand reduziert und die Stabilität der Karte insgesamt erhalten bleibt. Das Ausbilden der stoffschlüssigen Verbindung durch gezieltes Zuführen von Wärme, aber auch Ultraschallenergie von der Rückseite des Moduls 5 her erfolgt beim Ausführungsbeispiel nach Fig. 2 ähnlich wie zur Fig. 1 erläutert.

Die rückseitige Öffnung der Ausnehmung 2, die vom Modul 5 nach Fig. 2 verschlossen ist, kann noch mit einem Abdeckplättchen verschlossen werden. Ebenso kann Vergußmasse 8 Hohl- oder Zwischenräume ausfüllen.

Es sei an dieser Stelle angemerkt, daß bei den Herstellungsund Montageverfahren nach Fig. 1 und 2 die Kavität durch z.B. Ausfräsen von Material aus dem Kartenkörper gebildet werden kann, wobei eine obere Schicht, die etwa der Stärke des Moduls 5 bzw. des Trägersubstrats entspricht, dem Freilegen der Anschlußflächen 4 der Antenne 3 dient. Da die freigelegte Kontaktfläche allein abhängig von der Größe des einzubauenden Moduls ist, besteht die Möglichkeit, im Vergleich zu stirnseitiger Kontaktierung der Antenne die laterale Kontaktfläche zu vergrößern, gleichzeitig aber die Schichtdicke der Antenne zu verringern mit dem Vorteil einer geringeren Kartendicke.

Bei dem Ausführungsbeispiel nach Fig. 3a ist wiederum eine Ausnehmung 2 im Kartenkörper 1 vorhanden. Eine Antenne 3 befindet sich als entsprechende Schicht im Kartenkörper 1. Die Ausnehmung 2 ist wiederum beispielsweise durch Fräsen realisiert, wobei Anschlußflächen 4 der Antenne 3 freigelegt werden.

Gemäß Fig. 3a wird ein Halbleiterchip 6 auf einem Modul 5 oder Trägersubstrat in bekannter Weise angeordnet, wobei das Trägersubstrat 5, insbesondere die Trägersubstratrückseite, Kontakte z.B. in Form einer Metallisierungsschicht aufweist.

Montageseitig wird nun das Trägersubstrat bzw. der Modul 5 mit darauf montiertem Halbleiterchip 6 in die Ausnehmung 2 eingesetzt, wobei die Kontakte 9 mit den Anschlußflächen 4 der Antenne 3 in Verbindung gebracht werden. Durch Aussparungen 10 im Modul 5 kann nun gezielt Wärme durch eine Thermode zum Herstellen der stoffschlüssigen Verbindung zugeführt werden, wobei die Aussparungen auch der Aufnahme von Lot und/oder Flußmittel dienen.

Bei den voranstehend beschriebenen Ausführungsbeispielen sind die Anschlußflächen der Antenne bzw. die Kontaktflächen zur induktiven Informationsübertragungseinrichtung auf zwei reduziert, wobei insbesondere beim Ausführungsbeispiel nach Fig. 3a ein Verfüllen des verbleibenden Ausnehmungsraumes mit Vergußmasse 8 möglich ist und eine Abdeckplatte 7 vorgesehen sein kann.

Anhand der Fig. 3b ist eine prinzipielle Draufsicht auf den Modul 5 mit Halbleiterchip 6 gemäß Ausführungsbeispiel nach Fig. 3 gezeigt, wobei die Aussparungen 10 zu erkennen sind.

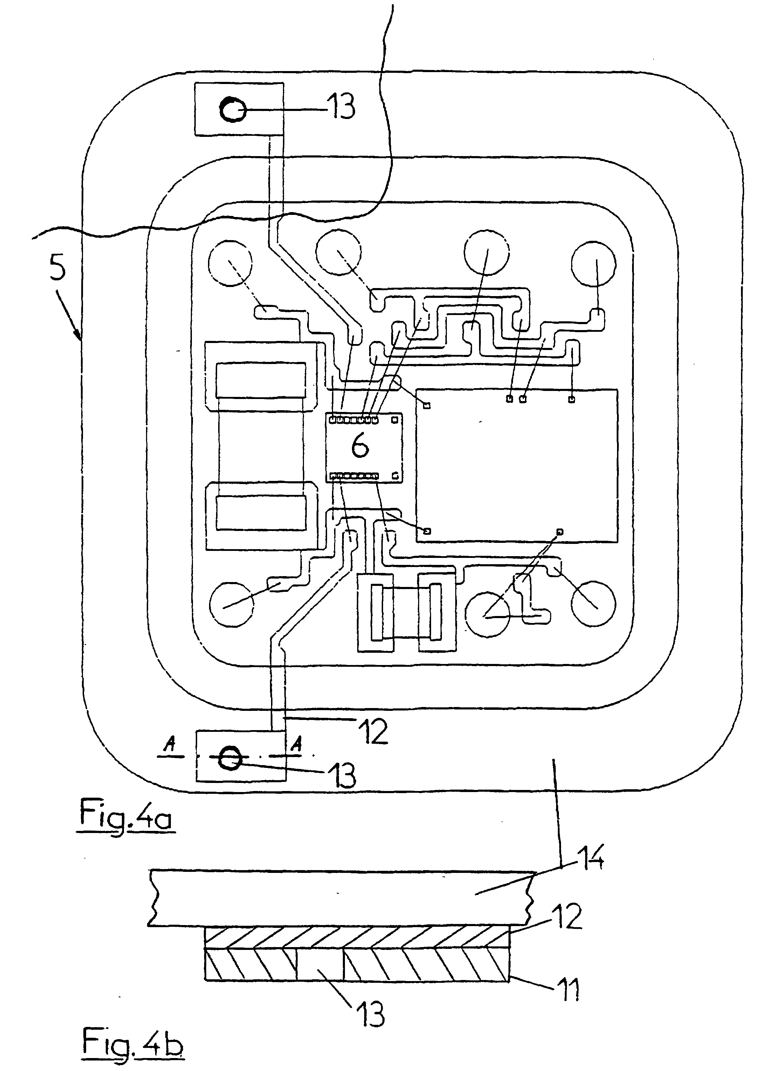

Mit Hilfe der Figuren 4a und 4b sei nun eine Ausführungsform der Erfindung näher erläutert, bei der Antennenanschlußkontakte in Form einer zweiten Metallisierungsebene 11 auf einer ersten Leitbahnmetallisierungsebene 12 aufgebracht sind. Hier besitzt die zweite Metallisierungsebene 11 im Bereich der Kontakte mindestens eine Öffnung 13. Die Öffnung 13 dient der Aufnahme von Lot oder wärmeaushärtenden Leitkleber.

Bei diesem Ausführungsbeispiel wird die Wärmeenergie zur Ausbildung der elektrischen Verbindung, z.B. mittels Laseroder IR-Strahlung nicht mittelbar über die zweite Metallisierungsebene 11, sondern unmittelbar, direkt auf das in der Öffnung befindliche Lot oder den dort befindlichen Kleber eingekoppelt. Durch die Größe der Öffnung 13 wird sichergestellt, daß für die auszubildende Kontaktverbindung jederzeit ausreichend Lot aufgenommen werden kann bzw. dort vorhanden ist. Die Erwärmung des Lots, z.B. mittels eines Lasers, kann durch das Trägersubstrat 14 hindurch erfolgen. Durch die insgesamt geringe Wärmeenergiemenge ist eine Kontaminierung der Fügepartner durch z.B. geschmolzenes Kunststoffmaterial des Kartenträgers ausgeschlossen und es kann bei dem Einsatz von wärmeaushärtenden Leitklebern die Aushärtezeit verringert werden.

### Bezugszeichenliste

- 1: Kartenträger
- 2: Ausnehmung
- 3: Antenne
- 4: Anschlußflächen der Antenne
- 5: Modul
- 6: Halbleiterchip
- 7: Abdeckplatten
- 8: Vergußmasse
- 9: Kontakte
- 10: Aussparungen
- 11: zweite Metallisierungsebene
- 12: erste Metallisierungsebene für Leitbahn
- 13: Öffnung
- 14: Trägersubstrat

## Patentansprüche

1. Verfahren zum Herstellen einer Chipkarte, wobei ein auf einem Modul befindlicher Halbleiterchip in eine Ausnehmung eines Kartenträgers oder Kartenkörpers mechanisch und elektrisch kontaktiert ist, sowie mit einer in der Chipkarte angeordneten induktiven Informationsübertragungseinrichtung, wobei
die Ausnehmung (2) Anschlußflächen oder Anschlußabschnitte (4) aufweist, welche Bestandteil der induktiven Informationsübertragungseinrichtung (3) sind oder zu dieser Fläche führen, wobei der auf dem Modul (5) befindliche Halbleiterchip (6) derart facedown in die Ausnehmung (2) eingesetzt wird, daß die Modulrückseite die Ausnehmung (2) nach außen hin im wesentlichen abschließt und daß die Modulvorderseite mit den Anschlußflächen oder - abschnitten (4) stoffschlüssig verbindbar ist **dadurch gekennzeichnet, daß** die Metallisierungsebene (11) des Moduls (5) für die Kontaktverbindung zur Informationsübertragungseinrichtung mindestens eine Öffnung (13) zur Aufnahme von Lot oder Leitkleber aufweist.

2. Verfahren nach Anspruch 1,
**dadurch gekennzeichnet,**
**daß** durch und über die Modulrückseite und die Öffnung (13) zu den Anschluß- oder Verbindungsflächen gezielt und unmittelbar Wärmeenergie zum Erzielen einer Löt- oder Schweißverbindung oder zum Aushärten von Leitkleber aufgebracht wird.

3. Verfahren nach Anspruch 1 oder 2,
**dadurch gekennzeichnet,**
**daß** der Modul (5) eine Grundfläche aufweist, die im wesentlichen um die Abmessungen der Anschlußflächen oder - abschnitte (4) gegenüber der Halbleiterchipfläche vergrößert ist, wobei durch facedown-Montage die sich aus der vergrößerten Grundfläche ergebenden Kontakte mit den Anschlußflächen oder -abschnitten (4) der induktiven Informationsübertragungseinrichtung (3) verbindbar sind.

4. Verfahren zum Herstellen einer Chipkarte, wobei ein auf einem Modul befindlicher Halbleiterchip in eine Ausnehmung eines Kartenträgers oder Kartenkörpers mechanisch und elektrisch kontaktiert ist, sowie mit einer in der Chipkarte angeordneten induktiven Informationsübertragungseinrichtung, wobei
die Ausnehmung Anschlußflächen oder -abschnitte aufweist, welche Bestandteil der Informationsübertragungseinrichtung sind oder zu dieser führen,
der Modul ein Trägersubstrat aufweist, auf welchem der Halbleiterchip fixiert ist, und
auf der Trägersubstratrückseite Kontakte (9) ausgebildet sind, welche beim Einsetzen des Moduls (5) mit der Trägersubstratrückseite voran in die Ausnehmung (2) des Kartenkörpers mit den Anschlußflächen oder -abschnitten (4) stoffschlüssig verbindbar sind, **dadurch gekennzeichnet, daß** hierfür auf dem Trägersubstrat seitliche Aussparungen (10), vorzugsweise im Kontaktbereich ausbildbar sind, und diese Aussparungen dem gezielten rückseitigen Zuführen von Lot und/oder Flußmittel sowie Wärmeenergie zum Erhalt und zur Ausbildung der stoffschlüssigen Verbindung dienen, und daß weiterhin der verbleibende Ausnehmungsraum bis im wesentlichen zur Oberfläche des Kartenkörpers (1) verfüllt ist und/oder in diesem Raum eine Abdeckplatte eingesetzt wird.

## Claims

1. A method for manufacturing a chip card, with a semiconductor chip being mechanically and electrically bonded in a recess of a card carrier or card body, and with an inductive information communication means arranged in the chip card, with the recess (2) comprising terminal faces or terminal sections (4) which are part of the inductive information communication means (3) or which lead to said surface, wherein the semiconductor chip (6) disposed on the module (5) is inserted face down into the recess (6) in such a manner that the module rear side essentially seals the recess (2) against the outside and that the module front side can be firmly joined with the terminal faces or terminal sections (4),
**characterised in that**
the metallisation plane (11) of the module (5) for contact making with the information communication means comprises at least one opening (13) for accommodating solder or conductive adhesive.

2. The method according to Claim 1,
**characterised in that**
heat energy is applied in a controlled and immediate manner through and across the module rear side and the opening (13) towards the terminal and joining faces for achieving a solder or weld joint or for curing the conductive adhesive.

3. The method according to Claim 1 or 2,
**characterised in that**
the module (5) comprises a base surface which is enlarged essentially by the dimensions of the terminal faces or sections (4), compared to the semiconductor chip surface, whereby the contacts resulting from the enlarged base surface can be connected with the terminal faces or sections (4) of the inductive information communication means (3) by virtue of the face down assembly.

4. A method for manufacturing a chip card, with a semiconductor chip being mechanically and electrically bonded in a recess of a card carrier or card body, and with an inductive information communication means arranged in the chip card, with
the recess comprising terminal faces or terminal sections which are part of the inductive information communication means or which lead to same,
with the module comprising a carrier substrate on which the semiconductor chip is secured and with contacts (9) being formed on the carrier substrate rear side, which upon the insertion of the module (5) with the carrier substrate rear side first into the recess (2) of the card body can firmly be joined with the terminal faces or sections (4),
**characterised in that**
for this purpose lateral recesses (10) may be formed in the carrier substrate, preferably in the contact area, and these recesses are utilised for the controlled supply of solder and/or flux as well as heat energy from the rear side for obtaining and forming the firm joint, and that furthermore the remaining recess space is filled essentially up to the surface of the card body (1) and/or a cover plate is inserted into this space.

## Revendications

1. Procédé de réalisation d'une carte à puce, dans lequel une puce à semi-conducteur située sur un module est mise en contact mécanique et électrique dans un évidement d'un porte-carte ou d'un corps de carte, comportant un dispositif de transmission d'informations inductif agencé dans la carte à puce, l'évidement (2) présentant des surfaces de connexion ou des tronçons de connexion (4) qui font partie du dispositif de transmission d'informations inductif (3) ou qui mènent vers cette surface, la puce à semi-conducteur (6) située sur le module (5) étant mise en place face en bas dans l'évidement (2) de telle sorte que la face arrière du module referme sensiblement l'évidement (2) vers l'extérieur et que la face avant du module est susceptible d'être reliée en coopération de matière aux surfaces ou tronçons de connexion (4), **caractérisé en ce que** le plan de métallisation (11) du module (5) pour la mise en contact avec le dispositif de transmission d'informations présente au moins un orifice (13) pour recevoir de l'apport de brasage ou de la colle conductrice.

2. Procédé selon la revendication 1, **caractérisé en ce que** de l'énergie thermique pour obtenir une liaison brasée ou soudée ou pour faire durcir la colle conductrice est appliquée de façon ciblée et directe à travers et via la face arrière du module et l'orifice (13) vers les surfaces de connexion ou de liaison.

3. Procédé selon l'une ou l'autre des revendications 1 et 2, **caractérisé en ce que** le module (5) présente une surface de base qui est agrandie sensiblement des dimensions des surfaces ou tronçons de connexion (4) par rapport à la surface de la puce à semi-conducteur, les contacts résultant de l'agrandissement de la surface de base pouvant être reliés aux surfaces ou tronçons de connexion (4) du dispositif de transmission d'informations inductif (3) par le montage face en bas.

4. Procédé de réalisation d'une carte à puce, dans lequel une puce à semi-conducteur située sur un module est mise en contact mécanique et électrique dans un évidement d'un porte-carte ou d'un corps de carte, comportant un dispositif de transmission d'informations inductif agencé dans la carte à puce,
l'évidement présentant des surfaces de connexion ou des tronçons de connexion qui font partie du dispositif de transmission d'informations inductif ou qui mènent vers celui-ci,
le module comprenant un substrat porteur sur lequel est fixée la puce à semi-conducteur et
des contacts (9) étant réalisés sur la face arrière du substrat porteur, qui, lors de la mise en place du module (5) tout d'abord par la face arrière du substrat porteur dans l'évidement (2) du corps de carte, sont susceptibles d'être reliés en coopération de matière aux surfaces ou tronçons de connexion (4), **caractérisé en ce qu'**à cet effet des échancrures latérales (10) sont susceptibles d'être ménagées sur le substrat porteur, de préférence dans la zone de contact, et ces échancrures servent à l'amenée ciblée côté arrière d'apport de brasage et/ou de flux ainsi que d'énergie thermique pour maintenir et établir la liaison en coopération de matière, et **en ce que** l'espace restant de l'évidement est rempli sensiblement jusqu'à la surface du corps de carte (1) et/ou une plaque de couverture est mise en place dans cet espace.
